# EUROPEAN PATENT APPLICATION

(11) **EP 3 482 658 A1**
(43) Date of publication of application: **15.05.2019**
(21) Application number: 17833495.9
(22) Date of filing: 24.07.2017
(51) Int. Cl.: A47J 27/00, A47J 36/00

(54) **HORIZONTAL SHAKING TYPE AUTOMATIC COOKER MACHINE**

(30) Priority: 28.07.2016 CN 201610599769
(71) Applicant: Liu, Jiandan, Pingguoyuan, Beijing 100041 (CN); Yang, Haiping, Pingguoyuan, Beijing 100041 (CN); Liu, Xiaoyan, Pingguoyuan, Beijing 100041 (CN)
(72) Inventor: LIU, Jiandan, Pingguoyuan Beijing 100041 (CN)
(74) Representative: Schmid, Nils T.F.
(86) International application number: PCT/CN2017/094001
(87) International publication number: WO 2018/019192

(57) **Abstract**

A horizontal shaking type automatic cooker includes five parts: a shaking platform, a heating device (4), a cooking pan (5), a motor (6), and an electronic control unit. The shaking platform includes two parts: a fixed base (1) and a shaking flat plate (3). The fixed base (1) and the shaking flat plate (3) are connected through four eccentric gears (2) that have a same diameter and that are in rectangular arrangement. When the four eccentric gears (2) synchronously rotate under the drive of the motor (6), the shaking flat plate (3) and the cooking pan (5) fastened to the shaking flat plate (3) start to shake horizontally and circumferentially in a non-rotating manner, and a dish in the pan is turned and mixed under the action of inertia and impact force at a pan edge, so as to achieve a stirring effect. Compared with a blade stirring mode and a roller stirring mode in a conventional automatic cooker technology, the automatic cooker provides a new horizontal shaking stirring mode. The automatic cooker has the following advantages: the solution is simple, costs are low, and the automatic cooker can be conveniently used in households; when the automatic cooker works during cover opening, water evaporates rapidly, there is much contact with oxygen gas, and a stir-frying effect is desirable; and when the automatic cooker works during cover opening, a user can participate in cooking midway, and operation habits and a cooldng effect of conventional cooldng are retained.

## Description

### TECHNICAL FIELD

The patent for invention belongs to the technical field of kitchen electrical equipment, and in particular, to a horizontal shaking type automatic cooker.

### BACKGROUND

Cooking is usually performed manually in a household. A simple stir-frying action is repeated from day to day in hundreds of millions of households, causing a huge labor waste; and cooking fumes produced during cooldng are harmful to health of hundreds of millions of cooldng persons. With the development of automation technologies, a variety of automatic cookers have entered people's lives. Among existing cookers, some cookers have complete functions and can complete operations such as feeding, stir-frying, dish removal, and pan cleaning, but have a relatively large size and relatively high costs. Some cookers have a relatively small size but work in a manner of closed cooldng, and dishes cooked by these cookers are tasted like those cooked through water boiling, and therefore fragrant and crispy effects of fried dishes cannot be achieved. In terms of a stirring mode, most of the cookers use a form of a stirring rod or roller currently.

### TECHNICAL ISSUE

The present invention provides a new simple stirring mode for an automatic cooker: horizontally and circumferentially shaldng a pan in a non-rotating manner, to drive mixing and turning of a dish in the pan.

### SOLUTION

### Technical solution

A horizontal shaldng type automatic cooker includes a shaking flat plate and a motor that are disposed on a base, and a heating device and a pan that are disposed on the shaking flat plate; the motor and the heating device each are connected, through a wire, to an electric cabinet disposed on one side of the base; the electric cabinet is internally provided with a PLC; a touch panel on which data can be set is disposed on an upper part of the electric cabinet; the motor controls start, stop, and a rotation speed by using the PLC to control shaking time and a shaking speed; the heating device controls start, stop, and fire power by using the PLC to control heating time and heating temperature; and the pan is placed on the heating device.

The shaking flat plate and the base are connected through four eccentric gears that have a same diameter and that are in rectangular arrangement, lower shafts of the eccentric gears are center shafts and fastened to four bearings of the base, upper shafts of the eccentric gears are eccentric shafts and fastened to four bearings of the shaldng flat plate; when the motor drives the gears to rotate, the shaking flat plate and the pan fastened to the shaking flat plate shake horizontally and circumferentially in a non-rotating manner, and a dish in the pan is turned and mixed under the action of inertia and impact at a pan edge, so as to achieve a stirring effect.

The heating device is a non-open-fire cooker such as an induction cooker or an open-fire cooker such as a natural gas stove; when the heating device is a non-open-fire cooker such as an induction cooker, the heating device is placed above the shaldng flat plate by using a hob, and the pan is fastened to the heating device by using a pan base; and when the heating device is an open-fire cooker such as a natural gas stove, the heating device may be placed in space between the base and the shaking flat plate, and the pan is directly fastened to the shaking flat plate by using the pan base.

### BENEFICIAL EFFECTS OF THE PRESENT INVENTION

### Beneficial effects:

A new simpler manner is provided for a mechanized "stir-frying" action as main labor in a cooking process.

The automatic cooker can work with a cover opened. When the automatic cooker works during cover opening, it is convenient for water evaporation and full contact between the dishes and air, so as to achieve fragrant and crispy effects of stir-frying.

Only a conventional oven and pan are made to shake wholly, without changing the conventional oven and pan, and operation habits and a cooking effect of conventional cooking are retained.

### BRIEF DESCRIPTION OF DRAWING

### Description of drawing:

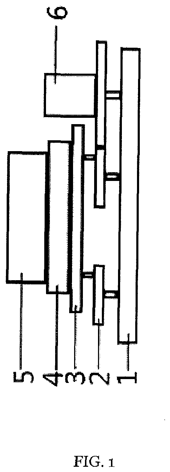

FIG. 1 is a schematic structural diagram of a horizontal shaking type automatic cooker.

In the figure: 1. base; 2. eccentric gear; 3. shaking flat plate; 4. induction cooker; 5. pan; 6. motor.

### PREFERRED EMBODIMENT FOR IMPLEMENTING THE PRESENT INVENTION

### Preferred implementation of the present invention:

The following further describes the present invention with reference to the accompanying drawing and a specific embodiment, and the present invention is not limited to the following embodiment.

As shown in the figure, a horizontal shaking type automatic cooker in the present invention includes a shaking flat plate (3) and a motor (6) that are disposed on a base (1), and a heating device (4) and a pan (5) that are disposed on the shaking flat plate (3), the motor (6) and the heating device (4) each are connected, through a wire, to an electric cabinet disposed on one side of the base (1); the electric cabinet is internally provided with a PLC; a touch panel on which data can be set is disposed on an upper part of the electric cabinet.

The motor (6) controls start, stop, and a rotation speed by using the PLC to control shaking time and a shaldng speed; the heating device (4) controls start, stop, and fire power by using the PLC to control heating time and heating temperature; and the pan (5) is placed on the heating device.

As shown in the figure, the shaking flat plate (3) and the base (1) are connected through four eccentric gears (2) that have a same diameter, lower shafts of the four eccentric gears (2) are center shafts and fastened to four bearings of the base (1), upper shafts of the four eccentric gears (2) are eccentric shafts and fastened to four bearings of the shaking flat plate (3); when the motor (6) drives the gears to rotate, the shaking flat plate (3) and the pan (5) fastened to the shaking flat plate (3) shake horizontally and circumferentially, and a dish in the pan (5) is turned and mixed under the action of inertia and impact at a pan edge, so as to achieve a stirring effect; in a running process, the pan (5) does not rotate and a direction of the pan (5) keeps unchanged.

An operation procedure of the automatic cooker is as follows:
1. After three data parameters, namely, heating power, a shaking speed, and startup duration, are set on the touch panel for different dishes, a heating switch is pressed, the automatic cooker starts heating, and count-down starts to be performed for the startup duration. 2. After a short pause, little edible oil is added; and after a short pause, ingredients, main ingredients, salt, and other seasonings are successively added; and then a shaking switch is pressed. 3. A dish in the pan is uniformly heated during shaking, and after the set startup duration expires, the automatic cooker stops running and completes cooking.

The foregoing is merely a preferred embodiment of the present invention, and does not constitute any limitation on the present invention. Any simple modification, alteration, and equivalent structure change made to the foregoing embodiment according to the technical essence of the present invention still fall within the protection scope of the technical solution of the present invention.

## Claims

1. A horizontal shaking type automatic cooker, comprising an eccentric gear (2), a shaking flat plate (3), and a motor (6) that are disposed on a base (1), and a heating device (4) and a pan (5) that are disposed on the shaking flat plate (3), wherein
the shaking flat plate (3) and the base (1) are connected through four eccentric gears (2) that have a same diameter and that are in rectangular arrangement, lower shafts of the four eccentric gears (2) are center shafts and fastened to four bearings of the base (1), upper shafts of the four eccentric gears (2) are eccentric shafts and fastened to four bearings of the shaldng flat plate (3); when the motor (6) drives the gears to rotate, the shaking flat plate (3) and the pan (5) fastened to the shaking flat plate (3) shake horizontally and circumferentially, and a dish in the pan (5) is turned and mixed under the action of inertia and impact at a pan edge, so as to achieve a stirring effect; and in a running process, the pan (5) does not rotate and a direction of the pan (5) keeps unchanged;
the motor (6) and the heating device (4) each are connected, through a wire, to an electric cabinet disposed on one side of the base (1); the electric cabinet is internally provided with a PLC; a touch panel on which data can be set is disposed on an upper part of the electric cabinet;
the motor (6) controls start, stop, and a rotation speed by using the PLC to control shaldng time and a shaking speed;
the heating device (4) controls start, stop, and fire power by using the PLC to control heating time and heating temperature; and
the pan (5) is placed on the heating device.

2. The horizontal shaking type automatic cooker according to claim 1, wherein the heating device (4) is a non-open-fire cooker or an open-fire cooker; when the heating device (4) is a non-open-fire cooker, the heating device (4) is placed above the shaldng flat plate (3) by using a hob, and the pan (5) is fastened to the heating device (4) by using a pan base; and when the heating device (4) is an open-fire cooker, the heating device (4) may be placed in space that is between the four eccentric gears (2) on the base and that is below the shaldng flat plate (3), and the pan (5) is directly fastened to the shaking flat plate (3) by using the pan base.
